# EUROPÄISCHE PATENTSCHRIFT

(11) **EP 2 178 727 B1**
(45) Veröffentlichungstag und Bekanntmachung des Hinweises auf die Patenterteilung: **26.09.2012**
(21) Anmeldenummer: 08774837.2
(22) Anmeldetag: 07.07.2008
(51) Int. Cl.: B60T 8/48

(54) **BREMSSYSTEM FÜR EIN FAHRZEUG**
BRAKE SYSTEM FOR A VEHICLE
SYSTÈME DE FREINAGE POUR UN VÉHICULE

(30) Priorität: 14.08.2007 DE 102007038397
(43) Veröffentlichungstag der Anmeldung: 28.04.2010
(73) Patentinhaber: Robert Bosch GmbH, 70442 Stuttgart (DE)
(72) Erfinder: SCHEPP, Rene, 71336 Waiblingen (DE); ALAZE, Norbert, 71706 Markgroeningen (DE)
(86) Internationale Anmeldenummer: PCT/EP2008/058784
(87) Internationale Veröffentlichungsnummer: WO 2009/021778

(56) Entgegenhaltungen:
- EP-A- 0 488 833
- WO-A-98/00323
- WO-A-2007/012562
- DE-A1- 4 202 388
- DE-A1-102004 056 661

## Beschreibung

### Stand der Technik

Die Erfindung geht aus von einem Bremssystem für ein Fahrzeug nach der Gattung des unabhängigen Patentanspruchs 1.

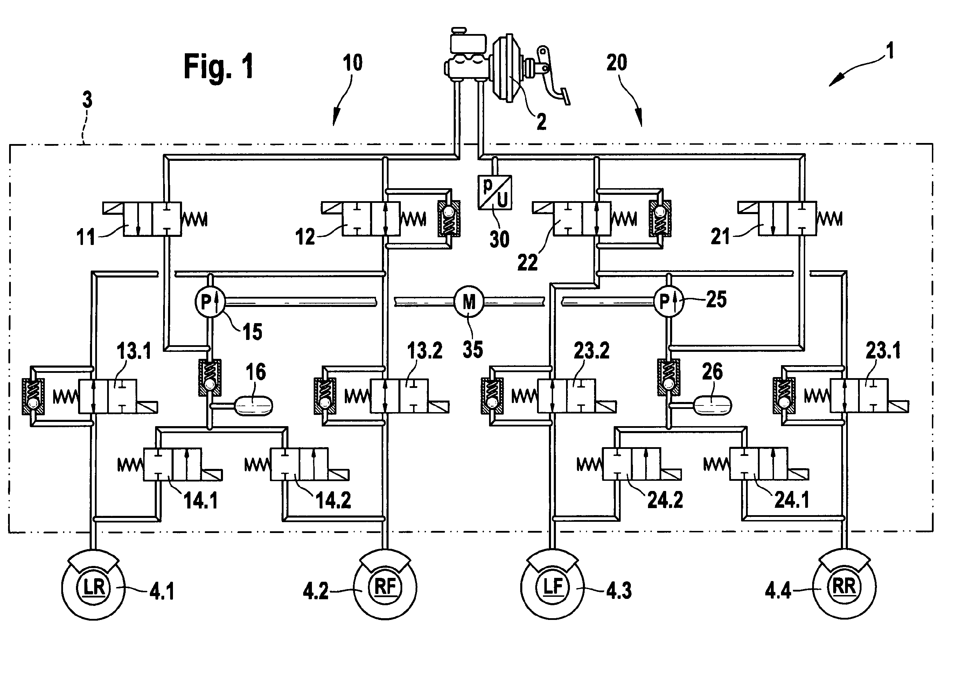

Aus dem Stand der Technik sind Bremssysteme bekannt, die verschiedene Sicherheitssysteme, wie beispielsweise ein Antiblockiersystem (ABS), elektronisches Stabilitätsprogramm (ESP) usw. umfassen, und verschiedene Sicherheitsfunktionen, wie beispielsweise eine Antiblockierfunktion, eine Antriebsschlupfregelung (ASR) usw. ausführen. Fig. 1 zeigt ein Bremssystem, mit dem verschiedene Sicherheitsfunktionen ausgeführt werden können. Wie aus Fig. 1 ersichtlich ist, umfasst ein herkömmliches Bremssystem 1 für ein Fahrzeug einen Hauptbremszylinder 2, eine Fluidsteuereinheit 3 und vier Radbremsen 4.1, bis 4.4, die jeweils einen zugehörigen Radbremszylinder aufweisen. Jeweils zwei der vier Radbremsen 4.1 bis 4.4 sind einem Bremskreis 10, 20 zugeordnet, wobei jeder Bremskreis 10, 20 mit dem Hauptbremszylinder 2 verbunden ist. So sind eine erste Radbremse 4.1, die beispielsweise an einer Fahrzeughinterachse an der linken Seite angeordnet ist, und eine zweite Radbremse 4.2, die beispielsweise an einer Fahrzeugvorderachse an der rechten Seite angeordnet ist, einem ersten Bremskreis 10 zugeordnet, und eine dritte Radbremse 4.3, die beispielsweise an der Fahrzeugvorderachse an der linken Seite angeordnet ist, und eine vierte Radbremse 4.4, die beispielsweise an einer Fahrzeughinterachse an der rechten Seite angeordnet ist, sind einem zweiten Bremskreis 20 zugeordnet. Jeder Radbremse 4.1 bis 4.4 ist ein Einlassventil 13.1, 13.2, 23.1, 23.2 und ein Auslassventil 14.1, 14.2, 24.1, 24.2 zugeordnet, wobei über die Einlassventile 13.1, 13.2, 23.1, 23.2 jeweils Druck in der korrespondierenden Radbremse 4.1, bis 4.4 aufgebaut werden kann, und wobei über die Auslassventile 14.1, 14.2, 24.1, 24.2 jeweils Druck in der korrespondierenden Radbremse 4.1, bis 4.4 abgebaut werden kann. Wie aus Fig. 1 weiter ersichtlich ist, ist der ersten Radbremse 4.1 ein erstes Einlassventil 13.1 und ein erstes Auslassventil 14.1 zugeordnet, der zweiten Radbremse 4.2 ist ein zweites Einlassventil 13.2 und ein zweites Auslassventil 14.2 zugeordnet. der dritten Radbremse 4.3 sind ein drittes Einlassventil 23.1 und ein drittes Auslassventil 24.2 zugeordnet und der vierten Radbremse 4.4 sind ein viertes Einlassventil 23.1 und ein viertes Auslassventil 24.1 zugeordnet. Zudem weist der erste Bremskreis 10 ein erstes Ansaugventil 11, ein erstes Umschaltventil 12, einen ersten Fluidspeicher 16 und eine erste Rückförderpumpe 15 auf. Der zweite Bremskreis 20 weist zusätzlich ein zweites Ansaugventil 21, ein zweites Umschaltventil 22, einen zweiten Fluidspeicher 26 und eine zweite Rückförderpumpe 25 auf, wobei die erste und zweite Rückförderpumpe 15, 25 von einem gemeinsamen Elektromotor 35 angetrieben werden. Des Weiteren umfasst die Fluidsteuereinheit 3 zur Ermittlung des aktuellen Bremsdrucks eine Sensoreinheit 30. Die Fluidsteuereinheit 3 verwendet zur Bremsdruckmodulation im ersten Bremskreis 10 das erste Umschaltventil 12, das erste Ansaugventil 11 und die erste Rückförderpumpe 15 und zur Bremsdruckmodulation im zweiten Bremskreis 20 das zweite Umschaltventil 12, das zweite Ansaugventil 11 und die zweite Rückförderpumpe 15.

Die Rückförderpumpen 15, 25 der beiden Bremskreise können beispielsweise als Kolbenpumpen oder als Zahnradpumpen ausgeführt werden. Während einer ESP-Regelung kann sich durch die offengeschalteten Ansaugventile 11 bzw. 21 ein Bremsdruck von bis zu 140 bar einstellen, mit dem die Saugseite der korrespondierenden Rückförderpumpe 15, 25 belastet wird, wenn in das System eingebremst werden muss. Auch in einem teilaktiven Systemzustand kann die Rückförderpumpe 15, 25 saugseitig mit bis zu 140 bar beaufschlagt werden. Zudem kann es zu einem Vordruck auf der Saugseite der Rückförderpumpe 15, 25 kommen, wenn der Druck des Hauptbremszylinders 2 über die offenen Umschaltventile 12 bzw. 22 zu den Rückförderpumpen 15, 25 geleitet wird und dann bis zu dem für die Regelung notwendigen Raddruck über die entsprechende Rückförderpumpe 15 bzw. 25 verstärkt wird. Bei einer Ausführung der Rückförderpumpen 15, 25 als Kolbenpumpen kann dieser Hochdruck, der auf eine exzenterseitige Dichtung der Rückförderpumpe 15, 25 wirkt, zu einem sehr hohen Verschleiß, Extrusion und dadurch zu erhöhter Leckage führen. Wenn als Rückförderpumpe 15, 25 eine Zahnradpumpe verwendet wird, belastet dieser Hochdruck Weltendichtringe der Rückförderpumpen 15, 25, was zu einer erhöhten Reibung und ebenso wie bei der Kolbenpumpe zu einem erhöhten Verschleiß der Dichtungen führen kann, wobei hochdruckbeständige Wellendichtringe sehr teuer sind.

In der Patentanmeldung WO 98/00323 wird beispielsweise ein hydraulisches Bremssystem für ein Fahrzeug beschrieben, Das beschriebene Bremssystem umfasst einen Hauptbremszylinder, eine Fluidsteuereinheit und mindestens eine Radbremse, wobei die Fluidsteuereinheit zur Bremsdruckmodulation in mindestens einem Bremskreis für jeden Bremskreis ein Umschaltventil, ein Ansaugventil, eine Rückförderpumpe und ein Schieberventil umfasst, das in eine Saugleitung zwischen der Rückförderpumpe und dem Hauptbremszylinder eingeschleift ist. Hierbei begrenzt das Schieberventil den wirksamen Druck an einer Saugseite der Rückförderpumpe auf einen vorgebbaren maximalen Druckwert und weist einen Hauptbremszylinderanschluss, einen Pumpenanschluss und einen druckentlasteten Anschluss zur Atmosphäre auf. Des Weiteren ist ein längsbeweglicher Kolben an der druckentlasteten Seite von einer Stellfeder mit einer Federkraft beaufschlagt und gibt in einer Ausgangstellung eine bestehende Verbindung zwischen dem Hauptbremszylinderanschluss und dem Pumpenanschluss vollständig frei, wobei ein sich im Schieberventil aufbauender Druck den Kolben gegen die Federkraft der Stellfeder in Richtung des druckentlasteten Anschlusses bewegt, wobei die Verbindung zwischen dem Hauptbremszylinderanschluss und dem Pumpenanschluss durch die Kolbenbewegung reduziert ist, wobei die Verbindung zwischen dem Hauptbremszylinderanschluss und dem Pumpenanschluss bei dem vorgegebenen maximalen Druckwert durch eine Anschlagstellung des Kolbens vollständig unterbrochen ist, und wobei die Federkraft der Stellfeder den Kolben aus der Anschlagstellung wieder in Richtung Ausgangsstellung bewegt, wenn der aktuelle Druck im Schieberventil unter den maximalen Druckwert abfällt.

In der Offenlegungsschrift DE 10 2004 056 661 A1 wird eine elektronisch regelbare Fahrzeugbremsanlage beschrieben. Bei der beschriebenen Fahrzeugbremsanlage wirkt der Hauptbremszylinder zur Steuerung des Bremsdrucks in einer Radbremse mit einer Hydraulikeinheit zusammen. Die Hydraulikeinheit weist elektronisch ansteuerbare Ventile zur Modulation des Bremsdrucks der Fahrzeugbremsanlage auf. Ferner ist hierfür ein ansteuerbarer extern angetriebener Druckerzeuger vorhanden, dessen Saugseite über eine Ansaugleitung mit dem Hauptbremszylinder verbindbar ist. Diese Ansaugleitung ist von einer Ansaugventileinheit steuerbar, welche ein elektronisch ansteuerbares Magnetventil und ein dazu parallel geschaltetes mechanisches Sperrventil umfasst. Das Sperrventil weist ein Sperrventilglied auf, das beim Überschreiten einer Druckschwelle aus einer offenen Grundstellung in eine Sperrstellung verbringbar ist. Als Elektromagnetventil der Ansaugventileinheit lässt sich ein Ventil einsetzen, das baugleich mit einem der Ventile zur Modulation des Bremsdrucks ist.

In der Offenlegungsschrift EP 0 488 833 A1 wird ein Bremssystem für ein Fahrzeug beschrieben. Das beschriebene Bremssystem umfasst ein Schieberventil, welches einen Hauptbremszylinderanschluss, einen Pumpenanschluss und einen druckentlasteten Anschluss zur Atmosphäre aufweist. Hierbei ist ein längsbeweglicher Kolben an der druckentlasteten Seite von einer Stellfeder mit einer Federkraft beaufschlagt und gibt in einer Ausgangstellung eine über eine Kolbenbohrung bestehende Verbindung zwischen dem Hauptbremszylinderanschluss und dem Pumpenanschluss vollständig frei.

### Offenbarung der Erfindung

Das erfindungsgemäße Bremssystem für ein Fahrzeug nach den Merkmalen des unabhängigen Patentanspruchs 1 hat demgegenüber den Vorteil, dass eine Fluidsteuereinheit für jeden Bremskreis ein Schieberventil aufweist, das in eine Saugleitung zwischen einer Rückförderpumpe und einem Hauptbremszylinder eingeschleift ist, wobei das Schieberventil den wirksamen Druck an einer Saugseite der Rückförderpumpe auf einen vorgebbaren maximalen Druckwert von beispielsweise 6 bar begrenzt. Dadurch wird in vorteilhafter Weise verhindert, dass an einer Dichtung zum Exzenterraum einer als Kolbenpumpe ausgeführten Rückförderpumpe oder an den Wellendichtringen einer als Zahnradpumpe ausgeführten Rückförderpumpe während des Systembetriebs hohe Drücke von über 100 bar anliegen. Durch die Begrenzung des wirksamen Druck an der Saugseite der Rückförderpumpe kann Verschleiß, Reibung, Extrusion der Dichtungen in der Rückförderpumpe reduziert werden, wodurch in vorteilhafter Weise auch eine Leckage der Rückförderpumpe nach außen reduziert, der Wirkungsgrad erhöht und die Lebensdauer der Rückförderpumpe deutlich verlängert werden kann. Bei einer als Zahnradpumpe ausgeführten Rückförderpumpe wird außerdem ein teurer, komplexer und hochdruckbeständiger Wellendichtring vermieden und es kann eine kostengünstige Wellendichtung eingebaut werden.

Erfindungsgemäß weist das Schieberventil einen Hauptbremszylinderanschluss, einen Pumpenanschluss und einen druckentlasteten Anschluss zur Atmosphäre auf. Ein längsbeweglicher Kolben ist an der druckentlasteten Seite von einer Stellfeder mit einer Federkraft beaufschlagt und gibt in einer Ausgangstellung eine über eine Kolbenbohrung bestehende Verbindung zwischen dem Hauptbremszylinderanschluss und dem Pumpenanschluss vollständig frei. Baut sich im Schieberventil ein Druck auf, dann wird der Kolben gegen die Federkraft der Stellfeder in Richtung des druckentlasteten Anschlusses bewegt. Durch die Kolbenbewegung wird die Verbindung zwischen dem Hauptbremszylinderanschluss und dem Pumpenanschluss reduziert. Wird der vorgegebene maximale Druckwert erreicht, dann wird die Verbindung zwischen dem Hauptbremszylinderanschluss und dem Pumpenanschluss durch eine Anschlagstellung des Kolbens vollständig unterbrochen, so dass sich kein höherer Druck an der Saugseite der Rückförderpumpe aufbauen kann. Fällt der aktuelle Druck im Schieberventil unter den maximalen Druckwert ab, dann wird der Kolben durch die Federkraft der Stellfeder aus der Anschlagstellung wieder in Richtung Ausgangsstellung bewegt. Dadurch wird erfindungsgemäß sichergestellt, dass sich der Druck in der Leitung zum Hauptbremszylinder aufbauen kann, ohne den Druck in der Saugseite der Rückförderpumpe über den vorgegebenen maximalen Druckwert ansteigen zu lassen. Der maximale Druckwert kann beispielsweise über die Federeigenschaften der Stellfeder eingestellt und vorgegeben werden.

Erfindungsgemäß ist der Hauptbremszylinderanschluss des Schieberventils direkt mit dem Hauptbremszylinder verbunden, d.h. das Schieberventil und das Ansaugventil sind parallel geschaltet und verbinden jeweils die Saugseite der Rückförderpumpe mit dem Hauptbremszylinder. Erfindungsgemäß umfasst das Schieberventil einen abgestuften Kolben, der zum druckentlasteten Anschluss einen ersten Durchmesser aufweist und zum Pumpenanschluss einen zweiten Durchmesser aufweist, wobei der zweite Durchmesser größer als der erste Durchmesser ist. Ein Übergang des Kolbens vom ersten auf den zweiten Durchmesser ist als Dichtkegel ausgeführt, der mit einem Dichtsitz im Gehäuse korrespondiert. Im drucklosen Zustand verbleibt der Kolben des Schieberventils in der Ausgangstellung, in welcher der Hauptbremszylinderanschluss über die Kolbenbohrung mit dem Pumpenanschluss verbunden ist.

Durch die in den abhängigen Ansprüchen aufgeführten Maßnahmen und Weiterbildungen sind vorteilhafte Verbesserungen des im unabhängigen Patentanspruch angegebenen Bremssystems für ein Fahrzeug möglich.

Während eines ABS-Eingriffs wird der Kolben vom Hauptbremszylinder über den Hauptbremszylinderanschluss mit einem Druck beaufschlagt, der den Kolben gegen die Federkraft der Stellfeder in Richtung des druckentlasteten Anschlusses bewegt, wobei der Kolben bei Erreichen des maximalen Druckwerts und der korrespondierenden Anschlagstellung, in welcher der Dichtkegel des Kolbens im Dichtsitz des Gehäuses abdichtet, die Verbindung zwischen dem Hauptbremszylinderanschluss und dem Pumpenanschluss vollständig unterbricht. Dadurch wird der Zufluss vom Hauptbremszylinder zur Rückförderpumpe unterbunden und die Fluidsteuereinheit kann eine normale ABS-Regelung durchführen.

Während eines teilaktiven Zustands des Bremssystems, in dem der Druck in der Leitung zum Hauptbremszylinder ansteigt, wird der Kolben des Schieberventils vom Hauptbremszylinderanschluss mit einem Druck beaufschlagt, der den Kolben gegen die Federkraft der Stellfeder in Richtung des druckentlasteten Anschlusses bewegt, wobei der Kolben bei Erreichen des maximalen Druckwerts und der korrespondierenden Anschlagstellung die Verbindung zwischen dem Hauptbremszylinderanschluss und dem Pumpenanschluss vollständig unterbricht. Fällt der aktuelle Druck im Schieberventil unter den maximalen Druckwert ab, dann bewegt die Federkraft der Stellfeder den Kolben aus der Anschlagstellung in Richtung Ausgangsstellung und die Verbindung zwischen dem Hauptbremszylinderanschluss und dem Pumpenanschluss wird wieder freigegeben.

Während eines ESP-Eingriffs verbleibt der Kolben des Schieberventils in der Ausgangstellung, wobei die Rückförderpumpe in diesem Zustand über das Schieberventil und das Ansaugventil parallel Fluid ansaugt. Dadurch kann in vorteilhafter Weise der Druckverlust über dem Ansaugventil und dem Schieberventil reduziert werden. Das kann, insbesondere bei tiefen Temperaturen und einer hochviskosen Flüssigkeit, zur Verbesserung der Druckaufbaudynamik führen. Wird das Schieberventil mit einem entsprechend großem Querschnitt ausgeführt, dann kann das Ansaugventil als einfaches Auslassventil ausgeführt werden, das einen größeren Durchflusswiderstand aufweist, jedoch kostengünstiger ist.

Vorteilhafte, nachfolgend beschriebene Ausführungsformen der Erfindung sind in den Zeichnungen dargestellt.

### Kurze Beschreibung der Zeichnungen

Fig. 1 zeigt ein schematisches Blockdiagramm eines herkömmlichen Bremssystems.
Fig. 2 zeigt ein schematisches Blockdiagramm eines weiteren herkömmlichen Bremssystems.
Fig. 3a und 3b zeigen jeweils eine schematische Schnittdarstellung eines Schieberventils für das weitere herkömmliche Bremssystem gemäß Fig. 2.
Fig. 4 zeigt ein schematisches Blockdiagramm eines Ausführungsbeispiels eines erfindungsgemäßen Bremssystems.
Fig. 5a und 5b zeigen jeweils eine schematische Schnittdarstellung eines Ausführungsbeispiels eines Schieberventils für das erfindungsgemäße Bremssystem gemäß Fig. 4.

### Ausführungsformen der Erfindung

In den Zeichnungen bezeichnen gleiche Bezugszeichen Elemente bzw. Komponenten, welche gleiche bzw. analoge Funktionen ausführen.

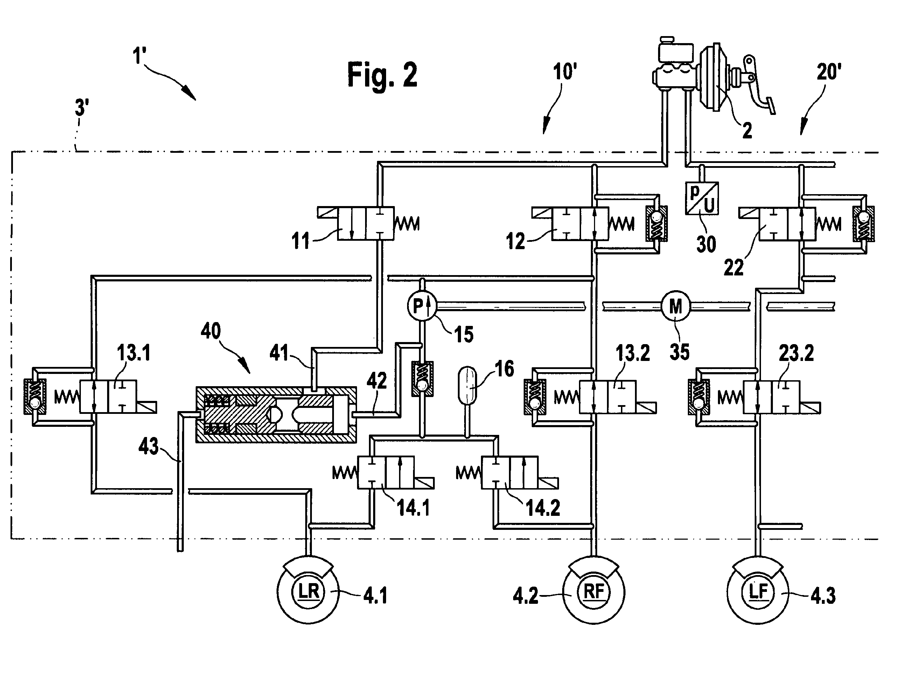

Das in Fig. 2 dargestellte weitere herkömmliche Bremssystem 1' für ein Fahrzeug ist im Wesentlichen gleich aufgebaut wie das herkömmlichen Bremssystem 1 gemäß Fig. 1 und umfasst viele Komponenten, welche die gleichen bzw. analoge Funktionen wie im herkömmlichen Bremssystem 1 ausführen. So umfasst das weitere herkömmliche Bremssystems 1' für ein Fahrzeug einen Hauptbremszylinder 2, eine Fluidsteuereinheit 3' und vier Radbremsen 4.1, bis 4.4, wobei das Bremssystem 1' in zwei gleich aufgebaute Bremskreise 10' und 20' aufgeteilt ist. Zur Vereinfachung der Beschreibung ist in Fig. 2 nur ein erster Bremskreis 10' vollständig dargestellt und wird im Detail beschrieben. Wie aus Fig. 2 ersichtlich ist, sind eine erste Radbremse 4.1, die beispielsweise an einer Fahrzeughinterachse an der linken Seite angeordnet ist, und eine zweite Radbremse 4.2, die beispielsweise an einer Fahrzeugvorderachse an der rechten Seite angeordnet ist, dem ersten Bremskreis 10' zugeordnet. Der ersten und zweiten Radbremse 4.1 und 4.2 sind jeweils ein Einlassventil 13.1, 13.2 und ein Auslassventil 14.1, 14.2 zugeordnet, wobei über die Einlassventile 13.1, 13.2 jeweils Druck in der korrespondierenden Radbremse 4.1 bzw. 4.2 aufgebaut werden kann, und wobei über die Auslassventile 14.1, 14.2 jeweils Druck in der korrespondierenden Radbremse 4.1 bzw. 4.2 abgebaut werden kann. Zur Modellierung des Bremsdrucks weist der erste Bremskreis 10' ein erstes Ansaugventil 11, ein erstes Umschaltventil 12, einen ersten Fluidspeicher 16 und eine erste Rückförderpumpe 15 auf, die beispielsweise als Kolbenpumpe oder als Zahnradpumpe ausgeführt ist und von einem Elektromotor 35 angetrieben wird. Des Weiteren umfasst die Fluidsteuereinheit 3' zur Ermittlung des aktuellen Bremsdrucks eine Sensoreinheit 30. Wie aus Fig. 2 weiter ersichtlich ist, weist die Fluidsteuereinheit 3' für jeden Bremskreis 10', 20' jeweils ein zusätzliches Schieberventil 40 auf, das in eine Saugleitung zwischen der Rückförderpumpe 15 und dem Ansaugventil 11 eingeschleift ist, so dass die Rückförderpumpe 15 saugseitig über das Schieberventil 40 und das Ansaugventil 11 mit dem Hauptbremszylinder 2 verbunden ist. Das Schieberventil 40 begrenzt den wirksamen Druck an der Saugseite 42 der Rückförderpumpe 15 auf einen vorgebbaren maximalen Druckwert. Der maximale Druckwert kann beispielsweise als Druckgrenzwert im Bereich von 4 bis 10 bar vorgegeben werden. Vorzugsweise wird ein maximaler Druckwert von ungefähr 6 bar vorgegeben. Dadurch wird verhindert, dass an einer Dichtung zum Exzenterraum einer als Kolbenpumpe ausgeführten Rückförderpumpe 15 oder an Wellendichtringen einer als Zahnradpumpe ausgeführten Rückförderpumpe 15 während des Systembetriebs hohe Drücke von über 100 bar anliegen, so dass Verschleiß, Reibung, Extrusion der Dichtungen der Rückförderpumpe 15 reduziert werden können. Dadurch kann in vorteilhafter Weise eine Leckage der Rückförderpumpe 15 nach außen reduziert, der Wirkungsgrad erhöht und die Lebensdauer der Rückförderpumpe 15 deutlich verlängert werden. Bei einer als Zahnradpumpe ausgeführten Rückförderpumpe 15 wird außerdem ein teurer, komplexer und hochdruckbeständiger Wellendichtring vermieden und es kann eine kostengünstige Wellendichtung eingebaut werden.

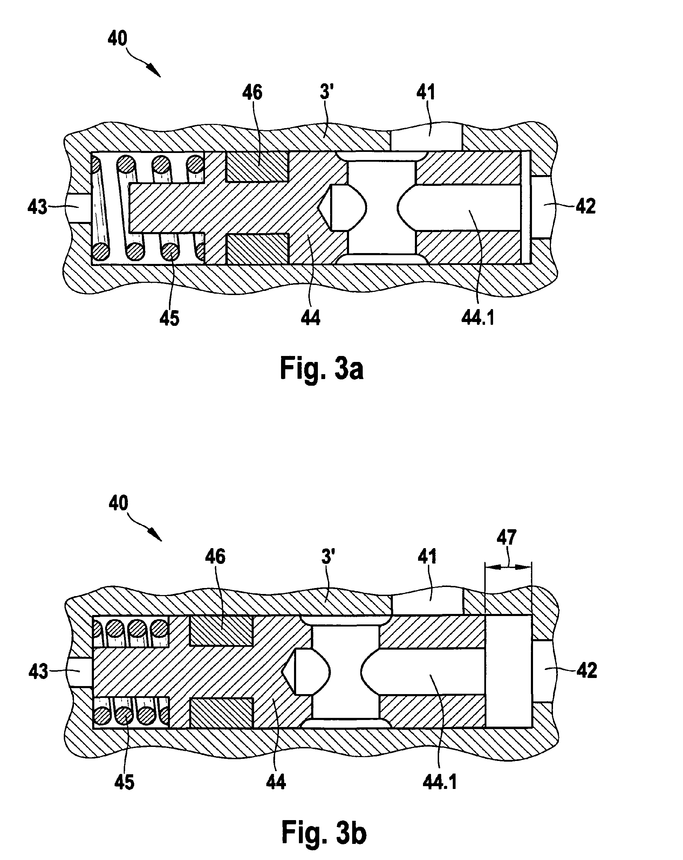

Wie aus Fig. 3a und 3b ist, weist das Schieberventil 40 einen Hauptbremszylinderanschluss 41, einen Pumpenanschluss 42, einen druckentlasteten Anschluss 43 zur Atmosphäre und einen längsbeweglichen Kolben 44 auf, der über eine Dichtung 46 zum Gehäuse und zum druckentlasteten Anschluss 43 abgedichtet ist. Der längsbewegliche Kolben 44 ist an der druckentlasteten Seite von einer Stellfeder 45 mit einer Federkraft beaufschlagt und gibt in einer Ausgangstellung, die in Fig. 3a dargestellt ist, eine über eine Kolbenbohrung 44.1 bestehende Verbindung zwischen dem Hauptbremszylinderanschluss 41 und dem Pumpenanschluss 42 vollständig frei. Während eines Saugbetriebs der Rückförderpumpe 15 verbleibt der Kolben 44 des Schieberventils 40 in der Ausgangstellung, in der die Verbindung zwischen dem Hauptbremszylinderanschluss 41 und dem Pumpenanschluss 42 vollständig freigegeben ist. Während eines teilaktiven Zustands des Bremssystems 1' wird der Kolben 44 von Seiten des Pumpenanschlusses 42 mit einem Druck beaufschlagt, der den Kolben 44 gegen die Federkraft der Stellfeder 45 in Richtung des druckentlasteten Anschlusses 43 bewegt, wobei die Verbindung zwischen dem Hauptbremszylinderanschluss 41 und dem Pumpenanschluss 42 durch die Kolbenbewegung reduziert wird. Bei Erreichen des maximalen Druckwerts befindet sich der Kolben 44 in einer korrespondierenden Anschlagstellung, die in Fig. 3b dargestellt ist, in welcher die Verbindung zwischen dem Hauptbremszylinderanschluss 41 und dem Pumpenanschluss 42 durch den Kolben 44 vollständig unterbrochen ist. Dadurch wird ein weiterer Druckaufbau zur Rückförderpumpe 15 unterbunden. Der maximale Druckwert kann beispielsweise über die Federeigenschaften der Stellfeder 45 eingestellt werden. Vorzugsweise wird der maximale Druckwert auf ungefähr 6 bar eingestellt. Die metallische Dichtung zwischen dem Kolben 44 und dem Gehäuse wird so ausgeführt, dass sich nur eine kleine Leckage ergibt, deren Volumen die laufende Pumpe problemlos fördert kann. Daher kann sich infolge der Leckage kein weiterer Druck aufbauen. Fällt der aktuelle Druck im Schieberventil 40 wieder unter den maximalen Druckwert ab, dann wird der Kolben 44 durch die Federkraft der Stellfeder 45 aus der Anschlagstellung wieder in Richtung Ausgangsstellung bewegt, wodurch die Verbindung zwischen dem Hauptbremszylinderanschluss 41 und dem Pumpenanschluss 42 wieder freigegeben wird. Damit ist sichergestellt, dass sich der Druck in der Leitung zum Hauptbremszylinder 2 aufbauen kann, ohne den Druck in der Saugseite der Rückförderpumpe 15 über den vorgegebenen maximalen Druckwert ansteigen zu lassen. In Fig. 3b bezeichnet das Bezugszeichen 47 den maximalen Hub des Kolbens 44.

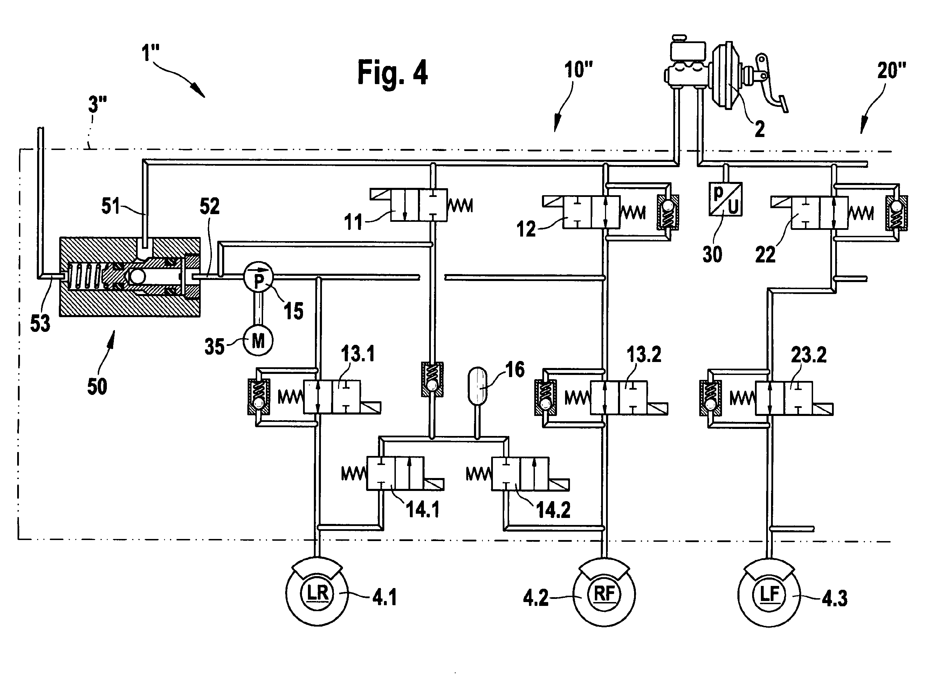

Das in Fig. 4 dargestellte Ausführungsbeispiel eines erfindungsgemäßen Bremssystems 1" für ein Fahrzeug ist im Wesentlichen gleich wie das weitere herkömmliche Bremssystem 1' gemäß Fig. 2 aufgebaut und umfasst die gleichen Komponenten, welche gleiche bzw. analoge Funktionen ausführen. So umfasst das Ausführungsbeispiel des erfindungsgemäßen Bremssystems 1" für ein Fahrzeug einen Hauptbremszylinder 2, eine Fluidsteuereinheit 3" und vier Radbremsen 4.1, bis 4.4, wobei auch das Bremssystem 1" in zwei gleich aufgebaute Bremskreise 10" und 20" aufgeteilt ist, von denen zur Vereinfachung der Beschreibung in Fig. 4 ebenfalls nur ein erster Bremskreis 10" vollständig dargestellt ist und im Detail beschrieben wird. Da die beiden dargestellten Bremssysteme 1', 1" im Wesentlichen die gleichen Komponenten umfassen, werden zur Vermeidung von Textwiederholungen hier nur die Unterschiede des Ausführungsbeispiels des erfindungsgemäßen Bremssystems 1" zum weiteren herkömmlichen Bremssystems 1' beschrieben.

Wie aus Fig. 4 weiter ersichtlich ist, weist die Fluidsteuereinheit 3" für jeden Bremskreis 10", 20" analog zum weiteren herkömmlichen Bremssystem 1' gemäß Fig. 2 jeweils ein zusätzliches Schieberventil 50 auf, das in eine Saugleitung zwischen der Rückförderpumpe 15 und dem Hauptbremszylinder 2 eingeschleift ist, so dass die Rückförderpumpe 15 saugseitig über das Schieberventil 50 oder das Ansaugventil 11 mit dem Hauptbremszylinder 2 verbunden ist, d.h. das Schieberventil 50 ist zum Ansaugventil 11 parallel geschaltet. Das Schieberventil 50 begrenzt den wirksamen Druck an der Saugseite 52 der Rückförderpumpe 15 auf den vorgebbaren maximalen Druckwert von vorzugsweise ungefähr 6 bar. Dadurch wird auch beim Ausführungsbeispiel des erfindungsgemäßen Bremssystems 1" verhindert, dass an einer Dichtung zum Exzenterraum einer als Kolbenpumpe ausgeführten Rückförderpumpe 15 oder an Wellendichtringen einer als Zahnradpumpe ausgeführten Rückförderpumpe 15 während des Systembetriebs hohe Drücke von über 100 bar anliegen, so dass Verschleiß, Reibung, Extrusion der Dichtungen der Rückförderpumpe 15 reduziert werden können. Dadurch kann in vorteilhafter Weise eine Leckage der Rückförderpumpe 15 nach außen reduziert, der Wirkungsgrad erhöht und die Lebensdauer der Rückförderpumpe deutlich verlängert werden. Bei einer als Zahnradpumpe ausgeführten Rückförderpumpe wird außerdem ein teurer, komplexer und hochdruckbeständiger Wellendichtring vermieden und es kann eine kostengünstige Wellendichtung eingebaut werden.

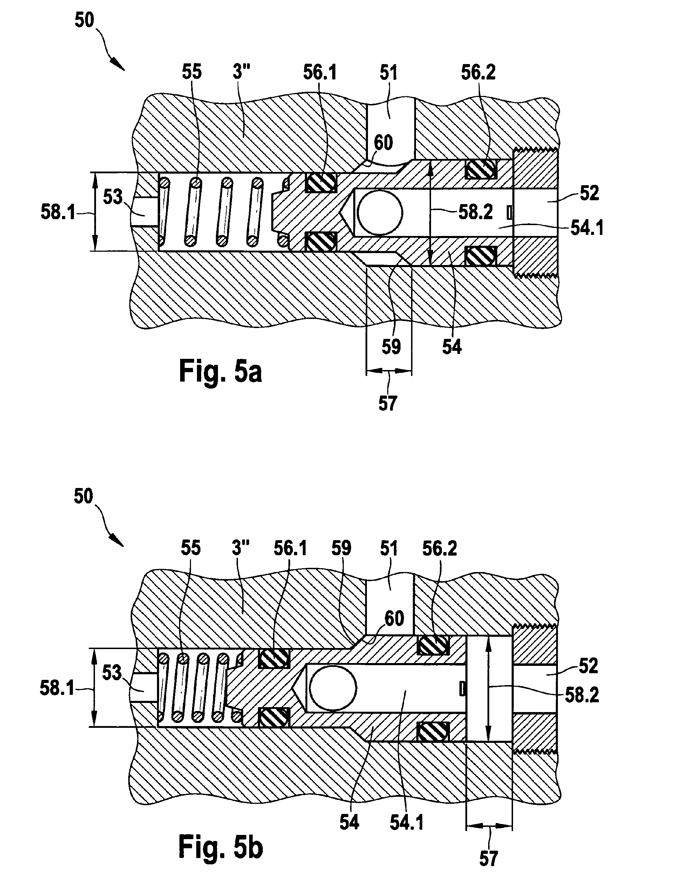

Wie aus Fig. 5a und 5b ersichtlich ist, weist das Schieberventil 50 einen Hauptbremszylinderanschluss 51, einen Pumpenanschluss 52, einen druckentlasteten Anschluss 53 zur Atmosphäre und einen längsbeweglichen Kolben 54 auf. Im Unterschied zum Schieberventil 40 gemäß Fig. 3a und 3b ist der längsbewegliche Kolben 54 das Schieberventils 50 als abgestufter Kolben 54 ausgeführt, der zu einem druckentlasteten Anschluss 53 einen ersten Durchmesser 58.1 aufweist und zu einem Pumpenanschluss 52 einen zweiten Durchmesser 58.2 aufweist, wobei der zweite Durchmesser 58.2 größer als der erste Durchmesser 58.1 ausgeführt ist. Der Kolben 54 ist zum druckentlasteten Anschluss 53 und zum Pumpenanschluss 52 jeweils über einen Dichtring 56.1 bzw. 56.2 gegen das Gehäuse abgedichtet. Ein Übergang des Kolbens 54 vom ersten auf den zweiten Durchmesser 58.1, 58.2 ist als Dichtkegel 59 ausgeführt, der mit einem Dichtsitz 60 im Gehäuse korrespondiert.

Der längsbewegliche Kolben 54 ist an der druckentlasteten Seite von einer Steilfeder 55 mit einer Federkraft beaufschlagt und verbleibt in einem drucklosen Zustand in einer Ausgangstellung, die in Fig. 5a dargestellt ist, in welcher eine über eine Kolbenbohrung 54.1 bestehende Verbindung zwischen dem Hauptbremszylinderanschluss 51 und dem Pumpenanschluss 52 vollständig freigegeben ist. Während eines ABS-Eingriffs wird der Kolben 54 von Seiten des Hauptbremszylinderanschlusses 51 mit einem Druck beaufschlagt, der den Kolben 54 gegen die Federkraft der Stellfeder 55 in Richtung des druckentlasteten Anschlusses 53 bewegt. Bei Erreichen des maximalen Druckwerts und der korrespondierenden Anschlagstellung, die in Fig. 5b dargestellt ist, dichtet der Dichtkegel 59 des Kolbens 54 im Dichtsitz 60 des Gehäuses ab, und die Verbindung zwischen dem Hauptbremszylinderanschluss 51 und dem Pumpenanschluss 52 wird vom Kolben 54 vollständig unterbrochen. Dadurch wird der Zufluss vom Hauptbremszylinder 2 zur Rückförderpumpe 15 unterbunden und die Fluidsteuereinheit 3" kann in diesem Zustand eine ABS-Regelung ausführen.

Während eines teilaktiven Zustands des Bremssystems wird der Kolben 54 des Schieberventils 50 von Seiten des Hauptbremszylinderanschlusses mit einem Druck beaufschlagt, der den Kolben 54 gegen die Federkraft der Stellfeder 55 in Richtung des druckentlasteten Anschlusses 53 bewegt, wobei die Verbindung zwischen dem Hauptbremszylinderanschluss 51 und dem Pumpenanschluss 52 durch die Kolbenbewegung reduziert wird. Bei Erreichen des maximalen Druckwerts von ungefähr 6 bar befindet sich der Kolben 54 in der korrespondierenden Anschlagstellung, die in Fig. 5b dargestellt ist, in welcher die Verbindung zwischen dem Hauptbremszylinderanschluss 51 und dem Pumpenanschluss 52 durch den Kolben 54 vollständig unterbrochen ist. Dadurch wird ein weiterer Druckaufbau zur Rückförderpumpe 15 unterbunden. Fällt der aktuelle Druck im Schieberventil 50 unter den maximalen Druckwert von ungefähr 6 bar ab, dann bewegt die Federkraft der Stellfeder 55 den Kolben 54 aus der Anschlagstellung in Richtung Ausgangsstellung, wodurch die Verbindung zwischen dem Hauptbremszylinderanschluss 51 und dem Pumpenanschluss 52 wieder freigegeben wird. Damit ist sichergestellt, dass sich der Druck in der Leitung zum Hauptbremszylinder 2 aufbauen kann, ohne den Druck in der Saugseite der Rückförderpumpe 15 über den vorgegebenen maximalen Druckwert ansteigen zu lassen. In Fig. 5b bezeichnet das Bezugszeichen 57 den maximalen Hub des Kolbens 54.

Während eines ESP-Eingriffs verbleibt der Kolben 54 des Schieberventils 50 in der Ausgangstellung, wobei die Rückförderpumpe 15 in diesem Zustand über das Schieberventil 50 und das Ansaugventil 11 parallel Fluid ansaugt. Dadurch wird der Druckverlust über das Ansaugventil 11 und das Schieberventil 50 reduziert, so dass insbesondere bei tiefen Temperaturen und hochviskoser Flüssigkeit die Druckaufbaudynamik verbessert werden kann. Wird das Schieberventil 50 mit einem entsprechend großem Querschnitt ausgeführt, dann kann das Ansaugventil 11 als einfaches Auslassventil ausgeführt werden, das einen größeren Durchflusswiderstand aufweist, jedoch kostengünstiger ist.

Durch das erfindungsgemäße Bremssystem wird in vorteilhafter Weise verhindert, dass an den Rückförderpumpen ein hoher Druck von über 100 bar anliegt. Dadurch kann Verschleiß, Reibung, Extrusion der Dichtungen der Rückförderpumpen reduziert werden und somit auch die Leckage der Rückförderpumpe nach außen reduziert und der Wirkungsgrad erhöht werden. Bei einer Ausführung der Rückförderpumpe als Zahnradpumpe können außerdem teure, komplexe und hochdruckbeständige Wellendichtringe durch einfache kostengünstige Wellendichtungen ersetzt werden.

## Patentansprüche

1. Bremssystem für ein Fahrzeug mit einem Hauptbremszylinder (2), einer Fluidsteuereinheit (3") und mindestens einer Radbremse (4.1 bis 4.4), wobei die Fluidsteuereinheit (3") zur Bremsdruckmodulation in mindestens einem Bremskreis (10", 20") für jeden Bremskreis (10", 20") ein Umschaltventil (12), ein Ansaugventil (11), eine Rückförderpumpe (15) und ein Schieberventil (50) umfasst, das in eine Saugleitung zwischen der Rückförderpumpe (15, 25) und dem Hauptbremszylinder (2) eingeschleift ist, wobei das Schieberventil (50) den wirksamen Druck an einer Saugseite (52) der Rückförderpumpe (15, 25) auf einen vorgebbaren maximalen Druckwert begrenzt und einen Hauptbremszylinderanschluss (51), einen Pumpenanschluss (52) und einen druckentlasteten Anschluss (53) zur Atmosphäre aufweist, wobei ein längsbeweglicher Kolben (54) an der druckentlasteten Seite von einer Stellfeder (55) mit einer Federkraft beaufschlagt ist und in einer Ausgangstellung eine bestehende Verbindung zwischen dem Hauptbremszylinderanschluss (51) und dem Pumpenanschluss (52) vollständig freigibt, wobei ein sich im Schieberventil (50) aufbauender Druck den Kolben (54) gegen die Federkraft der Stellfeder (55) in Richtung des druckentlasteten Anschlusses (53) bewegt, wobei die Verbindung zwischen dem Hauptbremszylinderanschluss (51) und dem Pumpenanschluss (52) durch die Kolbenbewegung reduziert ist, wobei die Verbindung zwischen dem Hauptbremszylinderanschluss (51) und dem Pumpenanschluss (52) bei dem vorgegebenen maximalen Druckwert durch eine Anschlagstellung des Kolbens (54) vollständig unterbrochen ist, und wobei die Federkraft der Stellfeder (55) den Kolben (54) aus der Anschlagstellung wieder in Richtung Ausgangsstellung bewegt, wenn der aktuelle Druck im Schieberventil (50) unter den maximalen Druckwert abfällt, **dadurch gekennzeichnet, dass** der Hauptbremszylinderanschluss (51) des Schieberventils (50) direkt mit dem Hauptbremszylinder (2) verbunden ist und das Schieberventil (50) einen abgestuften Kolben (54) umfasst, der zum druckentlasteten Anschluss (53) einen ersten Durchmesser (58.1) aufweist und zum Pumpenanschluss (52) einen zweiten Durchmesser (58.2) aufweist, wobei der zweite Durchmesser (58.2) größer als der erste Durchmesser (58.1) ist, wobei ein Übergang des Kolbens (54) vom ersten auf den zweiten Durchmesser (58.1, 58.2) als Dichtkegel (59) ausgeführt ist, der mit einem Dichtsitz (60) im Gehäuse korrespondiert, und wobei der Kolben (54) über eine Kolbenbohrung (54.1) die Verbindung zwischen dem Hauptbremszylinderanschluss (51) und dem Pumpenanschluss (52) herstellt.

2. Bremssystem nach Anspruch 1, **dadurch gekennzeichnet, dass** der Kolben (54) des Schieberventils (50) im drucklosen Zustand in der Ausgangstellung verbleibt, und während eines ABS-Eingriffs vom Hauptbremszylinderanschluss (51) mit einem Druck beaufschlagt ist, der den Kolben (54) gegen die Federkraft der Stellfeder (55) in Richtung des druckentlasteten Anschlusses (53) bewegt, wobei der Kolben (54) bei Erreichen des maximalen Druckwerts und der korrespondierenden Anschlagstellung, in welcher der Dichtkegel (59) des Kolbens (54) im Dichtsitz (60) des Gehäuses abdichtet, die Verbindung zwischen dem Hauptbremszylinderanschluss (51) und dem Pumpenanschluss (52) vollständig unterbricht, wobei die Fluidsteuereinheit (3") in diesem Zustand eine ABS-Regelung ausführt.

3. Bremssystem nach Anspruch 2 oder 3, **dadurch gekennzeichnet, dass** der Kolben (54) des Schieberventils (50) während eines teilaktiven Zustands des Bremssystems vom Hauptbremszylinderanschluss (51) mit einem Druck beaufschlagt ist, der den Kolben (54) gegen die Federkraft der Stellfeder (55) in Richtung des druckentlasteten Anschlusses (53) bewegt, wobei der Kolben (54) bei Erreichen des maximalen Druckwerts und der korrespondierenden Anschlagstellung, in welcher der Dichtkegel (59) des Kolbens (54) im Dichtsitz (60) des Gehäuses abdichtet, die Verbindung zwischen dem Hauptbremszylinderanschluss (51) und dem Pumpenanschluss (52) vollständig unterbricht, und wobei die Federkraft der Stellfeder (55) den Kolben (54) aus der Anschlagstellung in Richtung Ausgangsstellung bewegt, wenn der aktuelle Druck im Schieberventil (50) unter den maximalen Druckwert abfällt.

4. Bremssystem nach der Ansprüche 1 bis 3, **dadurch gekennzeichnet, dass** der Kolben (54) des Schieberventils (50) während eines ESP-Eingriffs in der Ausgangstellung verbleibt, wobei die Rückförderpumpe (15, 25) in diesem Zustand über das Schieberventil (50) und das Ansaugventil (11) parallel Fluid ansaugt.

## Claims

1. Brake system for a vehicle, with a brake master cylinder (2), with a fluid control unit (3") and with at least one wheel brake (4.1 to 4.4), the fluid control unit (3") comprising, for brake pressure modulation in at least one brake circuit (10", 20"), for each brake circuit (10", 20"), a changeover valve (12), an intake valve (11), a return pump (15) and a slide valve (50) which is inserted into a suction line between the return pump (15, 25) and the brake master cylinder (2), the slide valve (50) limiting the effective pressure on a suction side (52) of the return pump (15, 25) to a stipulatable maximum pressure value and having a brake master cylinder connection (51), a pump connection (52) and a pressure-relieved connection (53) to the atmosphere, a longitudinally movable piston (54) being acted upon on the pressure-relieved side with a spring force by an adjusting spring (55) and, in an initial position, completely opening an existing connection between the brake master cylinder connection (51) and the pump connection (52), a pressure which builds up in the slide valve (50) moving the piston (54) in the direction of the pressure-relieved connection (53) counter to the spring force of the adjusting spring (55), the connection between the brake master cylinder connection (51) and the pump connection (52) being reduced as a result of the piston movement, the connection between the brake master cylinder connection (51) and the pump connection (52) being interrupted completely at the stipulated maximum pressure value by a stop position of the piston (54), and the spring force of the adjusting spring (55) moving the piston (54) out of the stop position in the direction of the initial position again when the current pressure in the slide valve (50) falls below the maximum pressure value, **characterized in that** the brake master cylinder connection (51) of the slide valve (50) is connected directly to the brake master cylinder (2), and the slide valve (50) comprises a stepped piston (54) which has a first diameter (58.1) towards the pressure-relieved connection (53) and a second diameter (58.2) towards the pump connection (52), the second diameter (58.2) being larger than the first diameter (58.1), a transition of the piston (54) from the first to the second diameter (58.1, 58.2) being designed as a sealing cone (59) which matches a sealing seat (60) in the housing, and the piston (54) making the connection between the brake master cylinder connection (51) and the pump connection (52) via a piston bore (54.1).

2. Brake system according to Claim 1, **characterized in that** the piston (54) of the slide valve (50) remains in the initial position in the pressureless state and, during ABS action, is acted upon by the brake master cylinder connection (51) with a pressure which moves the piston (54) in the direction of the pressure-relieved connection (53) counter to the spring force of the adjusting spring (55), while, when the maximum pressure value and the corresponding stop position in which the sealing cone (59) seals off the piston (54) in the sealing seat (60) of the housing is reached, the piston (54) completely interrupts the connection between the brake master cylinder connection (51) and the pump connection (52), the fluid control unit (3") performing an ABS control in this state.

3. Brake system according to Claim 2 or 3, **characterized in that** the piston (54) of the slide valve (50) is acted upon, during a partially active state of the brake system, by the brake master cylinder connection (51) with a pressure which moves the piston (54) in the direction of the pressure-relieved connection (53) counter to the spring force of the adjusting spring (55), while, when the maximum pressure value and the corresponding stop position in which the sealing cone (59) of the piston (54) seals off in the sealing seat (60) of the housing is reached, the position (54) completely interrupts the connection between the brake master cylinder connection (51) and the pump connection (52), the spring force of the adjusting spring (55) moving the poston (54) out of the stop position in the direction of the initial position when the current pressure in the slide valve (50) falls below the maximum pressure value.

4. Brake system according to Claims 1 to 3, **characterized in that** the piston (54) of the slide valve (50) remains in the initial position during ESP action, in this state the return pump (15, 25) sucking in fluid in parallel via the slide valve (50) and the intake valve (11).

## Revendications

1. Système de freinage pour un véhicule comprenant un cylindre de freinage principal (2), une unité de commande de fluide (3") et au moins un frein de roue (4.1 à 4.4), l'unité de commande de fluide (3") comprenant, pour la modulation de la pression de freinage dans au moins un circuit de freinage (10", 20") pour chaque circuit de freinage (10", 20"), une soupape de commutation (12), une soupape d'aspiration (11), une pompe de refoulement (15) et une soupape à tiroir (50) qui est montée en circuit entre la pompe de refoulement (15, 25) et le cylindre de freinage principal (2) dans une conduite d'aspiration, la soupape à tiroir (50) limitant la pression efficace sur un côté d'aspiration (52) de la pompe de refoulement (15, 25) à une valeur de pression maximale prédéfinissable et présentant un raccord de cylindre de freinage principal (51), un raccord de pompe (52) et un raccord détendu en pression (53) vers l'atmosphère, un piston déplaçable longitudinalement (54) étant sollicité avec une force de ressort au niveau d'un côté détendu en pression par un ressort de commande (55) et dans une position de départ, libérant complètement une connexion existante entre le raccord de cylindre de freinage principal (51) et le raccord de pompe (52), une pression s'accumulant dans la soupape à tiroir (50) déplaçant le piston (54) à l'encontre de la force de ressort du ressort de commande (55) dans la direction du raccord détendu en pression (53), la connexion entre le raccord de cylindre de freinage principal (51) et le raccord de pompe (52) étant réduite par le mouvement du piston, la connexion entre le raccord de cylindre de freinage principal (51) et le raccord de pompe (52) étant complètement interrompue par une position de butée du piston (54) à la valeur de pression maximale prédéfinie, et la force de ressort du ressort de commande (55) déplaçant le piston (54) hors de la position de butée à nouveau dans la direction de la position de départ, quand la pression actuelle dans la soupape à tiroir (50) chute en dessous de la valeur de pression maximale, **caractérisé en ce que** le raccord de cylindre de freinage principal (51) de la soupape à tiroir (50) est connecté directement au cylindre de freinage principal (2) et la soupape à tiroir (50) comprend un piston étagé (54), qui présente vers le raccord détendu en pression (53) un premier diamètre (58.1) et vers le raccord de pompe (52) un deuxième diamètre (58.2), le deuxième diamètre (58.2) étant supérieur au premier diamètre (58.1), une transition du piston (54) du premier au deuxième diamètre (58.1, 58.2) étant réalisée sous forme de cône d'étanchéité (59), qui correspond à un siège d'étanchéité (60) dans le boîtier, et le piston (54) établissant, par le biais d'un alésage de piston (54.1), la connexion entre le raccord de cylindre de freinage principal (51) et le raccord de pompe (52).

2. Système de freinage selon la revendication 1, **caractérisé en ce que** le piston (54) de la soupape à tiroir (50) reste dans la position de départ dans l'état non sollicité en pression, et pendant un engagement d'ABS par le raccord de cylindre de freinage principal (51), est sollicité par une pression qui déplace le piston (54) à l'encontre de la force de ressort du ressort de commande (55) dans la direction du raccord détendu en pression (53), le piston (54), à l'obtention de la valeur de pression maximale et de la position de butée correspondante, dans laquelle le cône d'étanchéité (59) du piston (54) réalise l'étanchéité dans le siège d'étanchéité (60) du boîtier, interrompant complètement la connexion entre le raccord de cylindre de freinage principal (51) et le raccord de pompe (52), l'unité de commande de fluide (3") effectuant dans cet état une régulation d'ABS.

3. Système de freinage selon la revendication 2 ou 3, **caractérisé en ce que** le piston (54) de la soupape à tiroir (50) est sollicité par une pression pendant un état actif partiel du système de freinage par le raccord de cylindre de freinage principal (51), laquelle pression déplace le piston (54) à l'encontre de la force de ressort du ressort de commande (55) dans la direction du raccord (53) détendu en pression, le piston (54), à l'obtention de la valeur de pression maximale et de la position de butée correspondante, dans laquelle le cône d'étanchéité (59) du piston (54) réalise l'étanchéité dans le siège d'étanchéité (60) du boîtier, interrompant complètement la connexion entre le raccord de cylindre de freinage principal (51) et le raccord de pompe (52), et la force de ressort du ressort de commande (55) déplaçant le piston (54) de la position de butée dans la direction de la position de départ lorsque la pression actuelle dans la soupape à tiroir (50) chute en dessous de la valeur de pression maximale.

4. Système de freinage selon les revendications 1 à 3, **caractérisé en ce que** le piston (54) de la soupape à tiroir (50) reste dans la position de départ pendant un engagement ESP, la pompe de refoulement (15, 25) aspirant dans cet état du fluide parallèlement par le biais de la soupape à tiroir (50) et de la soupape d'aspiration (11).
